# EUROPEAN PATENT APPLICATION

(11) **EP 4 700 677 A1**
(43) Date of publication of application: **25.02.2026**
(21) Application number: 24791982.2
(22) Date of filing: 16.04.2024
(51) Int. Cl.: G06Q 20/06

(54) **PAYMENT PROCESSING**

(30) Priority: 19.04.2023 CN 202310425259
(71) Applicant: ALIPAY PAYMENT TECHNOLOGY CO., LTD., Shanghai 200120 (CN)
(72) Inventor: LIU, Sudong, Hangzhou, Zhejiang 310000 (CN); LI, Yannan, Hangzhou, Zhejiang 310000 (CN); SHEN, Junqiang, Hangzhou, Zhejiang 310000 (CN); RUAN, Xuecong, Hangzhou, Zhejiang 310000 (CN)
(74) Representative: Winter, Brandl - Partnerschaft mbB
(86) International application number: PCT/CN2024/087947
(87) International publication number: WO 2024/217397

(57) **Abstract**

Embodiments of this specification provide payment processing methods and apparatuses. The payment processing method includes: after obtaining a payment parameter sent by a wearable device and a payment page address obtained after a payment code is scanned by using an application program running on the wearable device, allocating a remote running container to the wearable device based on the payment parameter, running a program module corresponding to the application program in the remote running container, rendering an aggregated payment page in the program module based on the payment page address, using a payment amount as input of the aggregated payment page, and sending, to the wearable device, an order payment page generated based on a payee identifier and the payment amount to perform order payment processing.

## Description

### TECHNICAL FIELD

This document relates to the field of data processing technologies, and in particular, to payment processing methods and apparatuses.

### BACKGROUND

With continuous development of the Internet and information technology, users can perform payment in various methods in a process of enjoying a service or after enjoying a service, such as cash payment or electronic payment. In a payment processing process, electronic payment is more convenient and efficient compared to cash payment. As a result, the electronic payment technology becomes increasingly widespread, and increasingly more users begin to transition from cash payment to electronic payment. In this process, how to better help users to perform payment becomes a key focus of attention.

### SUMMARY

One or more embodiments of this specification provide a payment processing method, applied to a remote server. The method includes: obtaining a payment parameter sent by a wearable device, and a payment page address obtained after a payment code is scanned by using an application program running on the wearable device and decoding is performed based on a scanning result; allocating a remote running container to the wearable device based on the payment parameter, and running a program module corresponding to the application program in the remote running container; rendering an aggregated payment page in the program module based on the payment page address, and using a payment amount submitted by the wearable device as input of the aggregated payment page; and performing payment verification based on the payment amount and the payment page address, and sending, to the wearable device after the verification succeeds, an order payment page generated based on a payee identifier and the payment amount to perform order payment processing.

One or more embodiments of this specification provide another payment processing method, applied to a wearable device that runs an application program. The method includes: obtaining a payment page address obtained after a payment code is scanned by using the application program and decoding is performed based on a scanning result, and sending the payment page address and a payment parameter to a remote server; reading collection page data, and rendering an amount collection page in the application program based on the collection page data; obtaining a payment amount input through the amount collection page, and submitting the payment amount to the remote server; and receiving an order payment page that is sent by the remote server and that is generated based on a payee identifier and the payment amount, and performing order payment processing based on the order payment page, where the order payment page is generated after a remote running container is allocated to the wearable device based on the payment parameter, a program module corresponding to the application program is run in the remote running container, and an aggregated payment page is rendered in the program module based on the payment page address.

One or more embodiments of this specification provide a payment processing apparatus running on a remote server. The apparatus includes: an address acquisition module, configured to obtain a payment parameter sent by a wearable device, and a payment page address obtained after a payment code is scanned by using an application program running on the wearable device and decoding is performed based on a scanning result; a container allocation module, configured to: allocate a remote running container to the wearable device based on the payment parameter, and run a program module corresponding to the application program in the remote running container; a page rendering module, configured to: render an aggregated payment page in the program module based on the payment page address, and use a payment amount submitted by the wearable device as input of the aggregated payment page; and a page sending module, configured to: perform payment verification based on the payment amount and the payment page address, and send, to the wearable device after the verification succeeds, an order payment page generated based on a payee identifier and the payment amount to perform order payment processing.

One or more embodiments of this specification provide another payment processing apparatus running on a wearable device that runs an application program. The apparatus includes: an address sending module, configured to: obtain a payment page address obtained after a payment code is scanned by using an application program and decoding is performed based on a scanning result, and send the payment page address and a payment parameter to a remote server; a data reading module, configured to: read collection page data, and render an amount collection page in the application program based on the collection page data; an amount submission module, configured to: obtain a payment amount input through the amount collection page, and submit the payment amount to the remote server; and a payment processing module, configured to: receive an order payment page that is sent by the remote server and that is generated based on a payee identifier and the payment amount, and perform order payment processing based on the order payment page, where the order payment page is generated after a remote running container is allocated to the wearable device based on the payment parameter, a program module corresponding to the application program is run in the remote running container, and an aggregated payment page is rendered in the program module based on the payment page address.

One or more embodiments of this specification provide a payment processing device, including: a processor; and a storage configured to store computer-executable instructions. When the computer-executable instructions are executed, the processor is enabled to perform the following operations: obtaining a payment parameter sent by a wearable device, and a payment page address obtained after a payment code is scanned by using an application program running on the wearable device and decoding is performed based on a scanning result; allocating a remote running container to the wearable device based on the payment parameter, and running a program module corresponding to the application program in the remote running container; rendering an aggregated payment page in the program module based on the payment page address, and using a payment amount submitted by the wearable device as input of the aggregated payment page; and performing payment verification based on the payment amount and the payment page address, and sending, to the wearable device after the verification succeeds, an order payment page generated based on a payee identifier and the payment amount to perform order payment processing.

One or more embodiments of this specification provide another payment processing device, including: a processor; and a storage configured to store computer-executable instructions. When the computer-executable instructions are executed, the processor is enabled to perform the following operations: obtaining a payment page address obtained after a payment code is scanned by using an application program and decoding is performed based on a scanning result, and sending the payment page address and a payment parameter to a remote server; reading collection page data, and rendering an amount collection page in the application program based on the collection page data; obtaining a payment amount input through the amount collection page, and submitting the payment amount to the remote server; and receiving an order payment page that is sent by the remote server and that is generated based on a payee identifier and the payment amount, and performing order payment processing based on the order payment page, where the order payment page is generated after a remote running container is allocated to the wearable device based on the payment parameter, a program module corresponding to the application program is run in the remote running container, and an aggregated payment page is rendered in the program module based on the payment page address.

One or more embodiments of this specification provide a storage medium, configured to store computer-executable instructions. When the computer-executable instructions are executed by a processor, the following procedure is implemented: obtaining a payment parameter sent by a wearable device, and a payment page address obtained after a payment code is scanned by using an application program running on the wearable device and decoding is performed based on a scanning result; allocating a remote running container to the wearable device based on the payment parameter, and running a program module corresponding to the application program in the remote running container; rendering an aggregated payment page in the program module based on the payment page address, and using a payment amount submitted by the wearable device as input of the aggregated payment page; and performing payment verification based on the payment amount and the payment page address, and sending, to the wearable device after the verification succeeds, an order payment page generated based on a payee identifier and the payment amount to perform order payment processing.

One or more embodiments of this specification provide another storage medium, configured to store computer-executable instructions. When the computer-executable instructions are executed by a processor, the following procedure is implemented: obtaining a payment page address obtained after a payment code is scanned by using an application program and decoding is performed based on a scanning result, and sending the payment page address and a payment parameter to a remote server; reading collection page data, and rendering an amount collection page in the application program based on the collection page data; obtaining a payment amount input through the amount collection page, and submitting the payment amount to the remote server; and receiving an order payment page that is sent by the remote server and that is generated based on a payee identifier and the payment amount, and performing order payment processing based on the order payment page, where the order payment page is generated after a remote running container is allocated to the wearable device based on the payment parameter, a program module corresponding to the application program is run in the remote running container, and an aggregated payment page is rendered in the program module based on the payment page address. **BRIEF DESCRIPTION OF DRAWINGS**

To describe the technical solutions in one or more embodiments of this specification or in the conventional technology more clearly, the following briefly describes the accompanying drawings needed for describing the embodiments or the conventional technology. Clearly, the accompanying drawings in the following description merely show some embodiments of this specification, and a person of ordinary skill in the art can still derive other drawings from these accompanying drawings without creative efforts.
FIG. 1 is a schematic diagram illustrating an implementation environment of a payment processing method, according to one or more embodiments of this specification;
FIG. 2 is a flowchart illustrating processing of a payment processing method, according to one or more embodiments of this specification;
FIG. 3 is a schematic diagram illustrating an aggregated payment page, according to one or more embodiments of this specification;
FIG. 4 is a flowchart illustrating processing of a payment processing method applied to a watch scenario, according to one or more embodiments of this specification;
FIG. 5 is a flowchart illustrating processing of another payment processing method, according to one or more embodiments of this specification;
FIG. 6 is a flowchart illustrating processing of another payment processing method applied to a watch scenario, according to one or more embodiments of this specification;
FIG. 7 is a schematic diagram illustrating an embodiment of a payment processing apparatus, according to one or more embodiments of this specification;
FIG. 8 is a schematic diagram illustrating an embodiment of another payment processing apparatus, according to one or more embodiments of this specification;
FIG. 9 is a schematic structural diagram illustrating a payment processing device, according to one or more embodiments of this specification;
FIG. 10 is a schematic structural diagram illustrating another payment processing device, according to one or more embodiments of this specification.

### DESCRIPTION OF EMBODIMENTS

To make a person skilled in the art understand the technical solutions in one or more embodiments of this specification better, the following clearly and comprehensively describes the technical solutions in the one or more embodiments of this specification with reference to the accompanying drawings in the one or more embodiments of this specification. Clearly, the described embodiments are merely some but not all of the embodiments of this specification. All other embodiments obtained by a person of ordinary skill in the art based on the one or more embodiments of this specification without creative efforts shall fall within the protection scope of this specification.

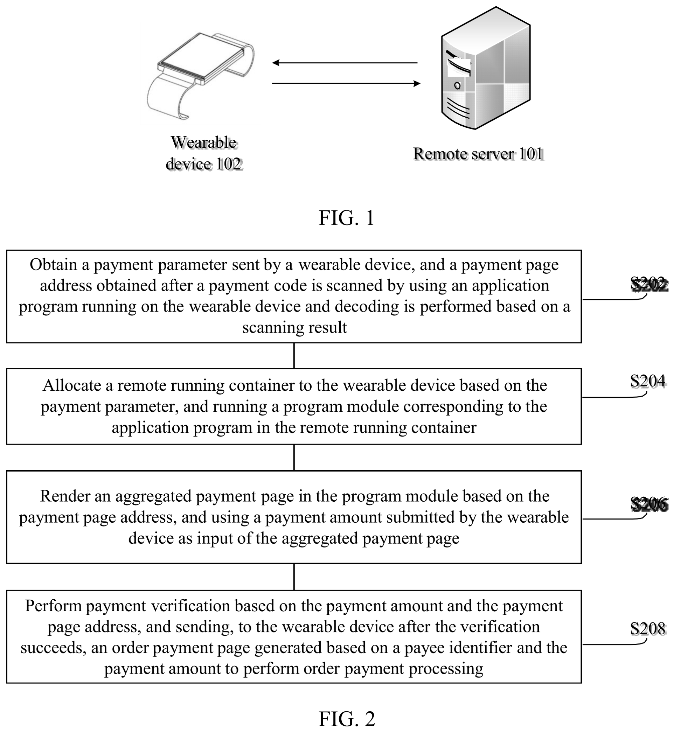

FIG. 1 is a schematic diagram illustrating an implementation environment of a payment processing method, according to one or more embodiments of this specification.

The payment processing method provided in one or more embodiments of this specification is applicable to an implementation environment of aggregated payment. The implementation environment includes at least a remote server 101, or at least a payment server, or at least an aggregation server.

In addition, the implementation environment can further include a wearable device 102, and the wearable device 102 can be configured with an application program. The wearable device 102 cooperates with the remote server 101 by using the application program to perform payment processing based on a payment code.

The remote server 101 can be a server, a server cluster including several servers, or one or more cloud servers in a cloud computing platform, and is configured to perform payment processing. A program module can be deployed on the remote server 101.

The wearable device 102 can be a watch, smart glasses, etc. The wearable device 102 interacts with the remote server by using the installed application program. The application program installed on the wearable device 102 has a correspondence with the program module deployed on the remote server 101.

In the implementation environment, after obtaining a payment parameter sent by the wearable device 102 and a payment page address obtained after a payment code is scanned by using the application program running on the wearable device 102 and decoding is performed, the remote server 101 allocates a remote running container to the wearable device based on the payment parameter, runs the program module corresponding to the application program in the remote running container, renders an aggregated payment page in the program module based on the payment page address, uses a payment amount as input of the aggregated payment page, and sends, to the wearable device 102 after payment verification succeeds, an order payment page generated based on a payee identifier and the payment amount to perform order payment processing. As such, the aggregated payment page that cannot be rendered in the application program of the wearable device is rendered in the program module of the remote server, to avoid a payment failure caused by a case that the wearable device cannot render the aggregated payment page, thereby increasing a payment success rate. In addition, the aggregated payment page is rendered in the program module of the remote server to reduce payment procedures of the wearable device.

One or more embodiments of a payment processing method provided in this specification are as follows.

Referring to FIG. 2, a payment processing method provided in an embodiment specifically includes step S202 to step S208.

Step S202: Obtain a payment parameter sent by a wearable device, and a payment page address obtained after a payment code is scanned by using an application program running on the wearable device and decoding is performed based on a scanning result.

The wearable device in this embodiment includes a smart wearable device. Specifically, the wearable device can be a smart watch, smart glasses, a smart band, smart closing, a smart helmet, smart ball shoes, etc. Optionally, the wearable device is configured with an image collection component, such as a camera. The payment parameter refers to a related parameter in a payment process. Optionally, the payment parameter includes at least one of the following: a device identifier of the wearable device, user information of the wearable device, and a scenario category identifier indicating that an interaction scenario is a payment scenario. This embodiment can be applied to a remote server.

The user information of the wearable device includes a user identifier of a user to whom the wearable device belongs. In actual application, there are a plurality of cases in which the wearable device interacts with the remote server, such as a payment scenario, a query scenario, and a verification scenario. In other words, there are a plurality of cases in which the wearable device interacts with the remote server to perform execution processing. In view of this, the payment parameter can include the scenario category identifier indicating that the interaction scenario between the wearable device and the remote server is the payment scenario, where the scenario category identifier includes an identifier that represents scenario uniqueness of the payment scenario.

The payment code refers to an identification code used to perform payment. The payment code can exist in a form of a two-dimensional code, a barcode, an audio code, or another identification code. Optionally, the payment code includes an aggregated code, that is, an aggregated payment code. The payment code can be compatible with a plurality of payment channels. For example, the payment code is compatible with a bank card payment channel, a credit card payment channel, and a third-party payment channel. Optionally, the payment code includes a payment code that is compatible with a payment channel corresponding to the application program.

The application program includes a payment application program, and the application program runs on the wearable device.

The payment page address can be a network resource address, for example, the payment page address can be a uniform resource locator (URL).

In specific implementation, the wearable device obtains the payment page address obtained after the payment code is scanned by using the application program running on the wearable device and decoding is performed based on the scanning result, and sends the payment page address and the payment parameter to the remote server. Correspondingly, the remote server can obtain the payment parameter sent by the wearable device and the payment page address obtained after the payment code is scanned by using the application program running on the wearable device and decoding is performed based on the scanning result. Therefore, a target payment channel can be invoked from a plurality of payment channels by scanning the payment code to perform payment processing, making payment processing convenient.

Specifically, in the process of performing decoding based on the scanning result, the wearable device can perform parsing processing on a scanned payment code image to obtain the payment page address of the payment code. In addition, the wearable device can also send the payment parameter and the scanned payment code image to the remote server, and the remote server performs parsing processing on the scanned payment code image to obtain the payment page address of the payment code.

It is worthwhile to note that, step S202 can be replaced with obtaining a payment page address that is sent by a wearable device and that is obtained after a payment code is scanned by using an application program running on the wearable device and decoding is performed based on a scanning result, and can form a new implementation with other processing steps provided in this embodiment.

Step S204: Allocate a remote running container to the wearable device based on the payment parameter, and run a program module corresponding to the application program in the remote running container.

In the above, the remote server obtains the payment parameter sent by the wearable device, and the payment page address obtained after the payment code is scanned by using the application program running on the wearable device and decoding is performed based on the scanning result. In this step, to improve pertinence of payment processing, the remote running container can be allocated to the wearable device based on the payment parameter, and the program module corresponding to the application program can be run in the remote running container.

The remote running container in this embodiment refers to a running framework or a running engine that is provided for the remote server. The remote running container is configured on a host machine deployed on the remote server, so that the program module can be run in the remote running container. The program module in this embodiment runs in the remote running container running on the host machine deployed on the remote server. The program module includes a program function module or an application component, and the program module can be an application program running on a lightweight wearable device. The host machine can be a virtual machine, or can be a real hardware machine. In a process in which the remote server interacts with the wearable device, the application program on the wearable device actually interacts with the program module on the remote server.

In specific implementation, to improve precision of container allocation and improve efficiency of container allocation, in an optional implementation provided in this embodiment, in the process of allocating the remote running container to the wearable device based on the payment parameter, the remote running container is allocated to the wearable device based on the device identifier of the wearable device, the user information of the wearable device, and/or the scenario category identifier indicating that an interaction scenario is a payment scenario that are/is included in the payment parameter. The following operations are specifically performed: searching a container pool for a mapped container identifier based on the device identifier of the wearable device, the user information of the wearable device, and/or the scenario category identifier indicating that an interaction scenario is a payment scenario that are/is included in the payment parameter; and allocating, to the wearable device based on the container identifier, the remote running container corresponding to the container identifier.

Specifically, a mapping relationship can be established between the device identifier of the wearable device, the user information of the wearable device, and/or the scenario category identifier indicating that an interaction scenario is a payment scenario and container identifiers in the container pool. In view of this, the container pool can be searched for the mapped container identifier based on the device identifier of the wearable device, the user information of the wearable device, and/or the scenario category identifier indicating that an interaction scenario is a payment scenario that are/is included in the payment parameter, and the remote running container corresponding to the container identifier can be allocated to the wearable device.

In addition, in the process of allocating the remote running container to the wearable device based on the payment parameter, the container pool can be searched for the mapped container identifier based on the device identifier of the wearable device, the user information of the wearable device, and/or the scenario category identifier indicating that an interaction scenario is a payment scenario that are/is included in the payment parameter; and if a target container corresponding to the container identifier is in a running state, running of a target program module in the target container is terminated, and the target container is allocated to the wearable device as the remote running container.

In addition, in the process of allocating the remote running container to the wearable device based on the payment parameter, the following operations can alternatively be performed: searching the container pool for the mapped container identifier based the device identifier of the wearable device, the user information of the wearable device, and/or the scenario category identifier indicating that an interaction scenario is a payment scenario that are/is included in the payment parameter; if a target container corresponding to the container identifier is in a running state, transferring, to a standby container, a permission for running a target application in the target container; allocating the target container to the wearable device as the remote running container; and after running of the program module in the remote running container is completed, transferring, to the remote running container, a permission for running the target application in the standby container.

It is worthwhile to note that, on the basis of step S202 being replaced with obtaining a payment page address that is sent by a wearable device and that is obtained after a payment code is scanned by using an application program running on the wearable device and decoding is performed based on a scanning result, step S204 can be replaced with allocating a remote running container to the wearable device and running a program module corresponding to the application program in the remote running container, and the two steps form a new implementation with other processing steps provided in this embodiment.

Step S206: Render an aggregated payment page in the program module based on the payment page address, and use a payment amount submitted by the wearable device as input of the aggregated payment page.

In the above, the remote server allocates the remote running container to the wearable device based on the payment parameter, and runs the program module corresponding to the application program in the remote running container. In this step, the remote server renders the aggregated payment page in the program module based on the payment page address, and uses the payment amount submitted by the wearable device as the input of the aggregated payment page.

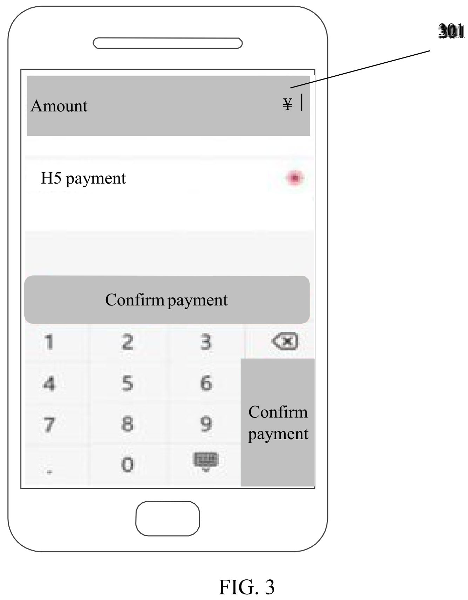

The aggregated payment page in this embodiment includes a payment page corresponding to the payment code. To be specific, a same payment page, that is, the aggregated payment page, can be displayed after the payment code is scanned by using application programs corresponding to payment channels. The payment amount refers to an amount that a user needs to be paid in a payment processing process. In the aggregated payment page shown in FIG. 3, the payment amount is used as input of an amount inputting control 301, an amount inputting box 301, or an amount inputting unit 301.

In specific implementation, in the entire process in which the remote server allocates the remote running container to the wearable device based on the payment parameter, runs the program module corresponding to the application program in the remote running container, and renders the aggregated payment page in the program module based on the payment page address, the wearable device can read collection page data, renders an amount collection page in the application program based on the collection page data, obtains the payment amount input through the amount collection page, and submits the payment amount to the remote server.

In a specific execution process, payment page data can be obtained based on access address information and an access path that are obtained by performing parsing processing on the payment page address, and the aggregated payment page is rendered in the program module based on the payment page data to obtain the aggregated payment page. In an optional implementation provided in this embodiment, in the process of rendering the aggregated payment page in the program module based on the payment page address, the following operations are performed: performing parsing processing on the payment page address, and obtaining payment page data based on access address information and an access path that are obtained through the parsing processing; and rendering the aggregate payment page in the program module based on the payment page data.

The access address information includes access host address information, and the access address information can be a domain name or a host identifier, or can be an Internet Protocol (IP) address. The access path includes a storage path for payment page data. The payment page data includes page data required for rendering the aggregated payment page.

In actual application, in the process of submitting the payment amount to the remote server by the wearable device, if the payment amount is directly sent to the remote server, data of the payment amount may be disclosed. In view of this, to improve security of the payment amount in the submission process, the wearable device can perform the following operations: invoking a first interface to encrypt the payment amount to obtain an encrypted payment amount; and submitting the encrypted payment amount to the remote server, to invoke a second interface to decrypt the encrypted payment amount to obtain the payment amount.

Correspondingly, after rendering the aggregated payment page in the program module based on the payment page address, the remote server can obtain the encrypted payment amount obtained after the wearable device encrypts the payment amount, and decrypt the encrypted payment amount to obtain the payment amount. In an optional implementation provided in this embodiment, after execution of rendering an aggregated payment page in the program module based on the payment page address and before execution of using a payment amount submitted by the wearable device as input of the aggregated payment page, the following operations can be further performed: obtaining an encrypted payment amount that is submitted by the wearable device and that is obtained after a first interface is invoked to encrypt the payment amount; and invoking a second interface to decrypt the encrypted payment amount to obtain the payment amount. Optionally, there is a correspondence between the first interface and the second interface, or an interface configuration of the first interface is the same as that of the second interface.

In one case, the correspondence includes a relationship that the first interface is an encryption interface and the second interface is a decryption interface. In another case, the interface configuration of the first interface can be the same as that of the second interface. The interface configuration includes an encryption module and a decryption module, that is, the encryption module and the decryption module are configured for both the first interface and the second interface.

Optionally, the payment amount is obtained by the wearable device through input on the amount collection page. In an optional implementation provided in this embodiment, the amount collection page is generated in the following method: reading collection page data, and rendering the amount collection page in the application program based on the collection page data; or obtaining collection page data delivered by the remote server, and rendering the amount collection page in the application program based on the obtained collection page data.

In addition to the implementation in which the payment amount obtained by the remote server is input by the wearable device through the amount collection page and submitted to the remote server, in an actual application scenario, because the amount collection page of the wearable device such as a watch is relatively small, convenience of inputting the payment amount through the amount collection page of the watch is relatively poor. In view of this, to improve convenience of inputting the payment amount to improve efficiency of inputting the payment amount, optionally, the payment amount is submitted to the remote server after the wearable device detects that a user inputs the payment amount by using an interaction tool corresponding to the payment code. The interaction tool includes a device that interacts with the user. It is worthwhile to note that the wearable device obtains the payment amount from the interaction tool based on a data connection established with the interaction tool, where the data connection can be a Bluetooth connection.

In addition, the interaction tool corresponding to the payment code can alternatively collect the payment amount input by the user and send the payment amount to an aggregation server, and the aggregation server synchronizes the payment amount to the remote server. In other words, the payment amount is collected by the interaction tool corresponding to the payment code and sent to the aggregation server, and is synchronized to the remote server by the aggregation server. The payment code belongs to an aggregation platform corresponding to the aggregation server.

In specific implementation, in the process of using the payment amount submitted by the wearable device as the input of the aggregated payment page, the payment amount can be used as input of an amount inputting control on the aggregated payment page, that is, the payment amount is used as an input field of the amount inputting control on the aggregated payment page, where the amount inputting control can be an amount inputting box or an amount inputting unit.

It is worthwhile to note that, step S206 can be replaced with rendering an aggregated payment page in the program module based on the payment page address, and using a payment amount as input of the aggregated payment page, and can form a new implementation with other processing steps provided in this embodiment.

Step S208: Perform payment verification based on the payment amount and the payment page address, and send, to the wearable device after the verification succeeds, an order payment page generated based on a payee identifier and the payment amount to perform order payment processing.

In the above, the remote server renders the aggregated payment page in the program module based on the payment page address, and uses the payment amount submitted by the wearable device as the input of the aggregated payment page. In this step, payment verification is performed based on the payment amount and the payment page address, and after the verification succeeds, the order payment page generated based on the payee identifier and the payment amount is sent to the wearable device to perform order payment processing based on the order payment page.

The payee identifier in this embodiment refers to an identifier of a payee in a payment processing process. The order payment page includes a page for paying for a to-be-paid order. The order payment page can be configured with the payment amount, payee identifier, and/or a payment control. In addition, the order payment page can also be configured with other data.

Optionally, the order payment page is generated based on a collection code identifier and the payment amount after a payment server receives the collection code identifier sent by an aggregation server corresponding to the payment code. The payment server includes a server that performs payment processing.

In specific implementation, to increase a payment processing success rate and avoid the payment amount, etc. not satisfying a payment requirement, in an optional implementation provided in this embodiment, in the process of performing payment verification based on the payment amount and the payment page address, the following operations are performed: generating a payment identifier based on the payment amount and the payment page address, and sending the payment identifier to a payment server, to send a detection request that carries the payment identifier to an aggregation server; determining that the payment verification succeeds when detection is performed based on the payment identifier and the detection succeeds; or determining that the payment verification fails when detection is performed based on the payment identifier and the detection fails.

Optionally, performing the detection based on the payment identifier includes: verifying, based on the payment identifier, whether a merchant corresponding to the payment page address exists in a merchant set, and if yes, determining that the detection succeeds, or if no, determining that the detection fails; or determining, based on the payment identifier, whether the payment amount is within a preset amount value range, and if yes, determining that the detection succeeds, or if no, determining that the detection fails.

In addition, in the process of performing detection based on the payment identifier, based on the payment identifier, it can be verified whether a merchant corresponding to the payment page address exists in a merchant set, and determined whether the payment amount is within a preset amount value range; and if yes, it is determined that the detection succeeds; or if no, it is determined that the detection fails.

In addition, the detection can alternatively be performed in a "serial" way. Specifically, it can be first verified, based on the payment identifier, whether a merchant corresponding to the payment page address exists in a merchant set; if yes, it is determined, based on the payment identifier, whether the payment amount is within a preset amount value range; and if yes, it is determined that the detection succeeds. Alternatively, it can be first determined, based on the payment identifier, whether the payment amount is within a preset amount value range; if yes, it is verified, based on the payment identifier, whether a merchant corresponding to the payment page address exists in a merchant set; and if yes, it is determined that the detection succeeds.

In an optional implementation provided in this embodiment, after sending the payment identifier, the payment server performs the following operations: obtaining the payee identifier returned by the aggregation server after the detection succeeds; and generating the order payment page based on the payment amount and the payee identifier, and sending the order payment page to the remote server.

In actual application, there is a case that an institution member performs payment for official purposes. In view of this, to satisfy more payment scenario requirements, in an optional implementation provided in this embodiment, in the process of performing payment verification based on the payment amount and the payment page address, and sending, to the wearable device after the verification succeeds, the order payment page generated based on the payee identifier and the payment amount, the following operations are performed: generating a payment identifier based on the payment amount and the payment page address, and sending the payment identifier to a payment server, to send a detection request that carries the payment identifier to an aggregation server; sending, after the detection succeeds, an institution payment verification request that carries an institution payment identifier to the payment server, to perform institution payment verification on the payment amount based on the institution payment identifier; obtaining a verification success reminder synchronized by the payment server after the institution payment verification succeeds, and sending an information request instruction to the aggregation server based on the verification success reminder to send the payee identifier to the payment server; and obtaining the order payment page that is sent by the payment server and that is generated based on the payment amount and the payee identifier.

Optionally, performing the institution payment verification on the payment amount includes: verifying whether the payment amount is within an institution payment amount range; and if yes, determining that the institution payment verification succeeds.

In specific implementation, the remote server sends the order payment page generated based on the payee identifier and the payment amount to the wearable device, and the wearable device can perform order payment processing based on the order payment page. In an optional implementation provided in this embodiment, the order payment processing is implemented in the following method: obtaining a trigger instruction for a payment control on the order payment page; and sending a payment request to a payment server based on the trigger instruction, to transfer funds from a user account based on the payment amount, and transfer the transferred funds to a fund account corresponding to an aggregation server.

In another optional implementation provided in this embodiment, the order payment processing is implemented in the following method: sending a payment request to a payment server based on a trigger instruction for a payment control on the order payment page, so that after identity verification is performed on a user based on a biometric feature of the user collected by a camera invoked by the wearable device and the verification succeeds, funds are transferred from a user account based on the payment amount, and the transferred funds are transferred to a fund account corresponding to an aggregation server.

In this embodiment of this application, the biometric feature of the user can include, for example, an eye feature, a voiceprint, a fingerprint, a palmprint, a heartbeat, a pulse, a chromosome, DNA, and a bite mark of a human tooth. The eye feature can include a biometric feature such as an iris or a sclera.

In a specific execution process, after the wearable device interacts with the remote server to complete the order payment processing, to improve utilization of the remote running container and avoid resource waste caused by long-term running of the remote running container, in an optional implementation provided in this embodiment, after execution of performing payment verification based on the payment amount and the payment page address, and sending, to the wearable device after the verification succeeds, an order payment page generated based on a payee identifier and the payment amount to perform order payment processing, the following operations are further performed: delivering a detection message to the wearable device based on a time period; and exiting running of the program module in the remote running container if a quantity of detection messages that are not responded by the wearable device within preset time exceeds a preset quantity threshold.

The detection message includes a message for detecting a response state of the wearable device.

Further, after running of the program module in the remote running container is exited, to further reduce resource waste on of the remote running container, resource release can be performed on the remote running container, and resource release can be performed on a host machine that runs the remote running container.

In addition, in an optional implementation provided in this embodiment, after execution of performing payment verification based on the payment amount and the payment page address, and sending, to the wearable device after the verification succeeds, an order payment page generated based on a payee identifier and the payment amount to perform order payment processing, the following operations are further performed: performing resource release on the remote running container, and performing resource release on a host machine that runs the remote running container.

It is worthwhile to note that, after the payment verification performed based on the payment amount and the payment page address succeeds, the remote server can also send the payee identifier to the wearable device. The wearable device generates the order payment page based on the payee identifier and the payment amount, and performs order payment processing based on the order payment page.

It is worthwhile to note that, step S208 can be replaced with sending an order payment page generated based on a payee identifier and the payment amount to the wearable device to perform order payment processing, and can form a new implementation with other processing steps provided in this embodiment.

In conclusion, in the payment processing method provided in one or more embodiments of this embodiment, first, the payment parameter sent by the wearable device and the payment page address obtained after the payment code is scanned by using the application program running on the wearable device and decoding is performed based on the scanning result are obtained, the container pool is searched for the mapped container identifier based on the device identifier of the wearable device, the user information of the wearable device, and/or the scenario category identifier indicating that an interaction scenario is a payment scenario that are/is included in the payment parameter, the remote running container corresponding to the container identifier is allocated to the wearable device based on the container identifier, and the program module corresponding to the application program is run in the remote running container.

Second, parsing processing is performed on the payment page address, the payment page data is obtained based on the access address information and the access path that are obtained through parsing processing, the aggregated payment page is rendered in the program module based on the payment page data, and the payment amount submitted by the wearable device is used as the input of the aggregated payment page.

Finally, the payment verification is performed based on the payment amount and the payment page address, and the order payment page generated based on the payee identifier and the payment amount is sent to the wearable device after the verification succeeds to perform order payment processing. As such, the aggregated payment page that cannot be rendered in the application program of the wearable device is rendered in the program module of the remote server, to avoid a payment failure caused by a case that the wearable device cannot render the aggregated payment page, thereby increasing a payment success rate. In addition, the aggregated payment page is rendered in the program module of the remote server to reduce payment procedures of the wearable device.

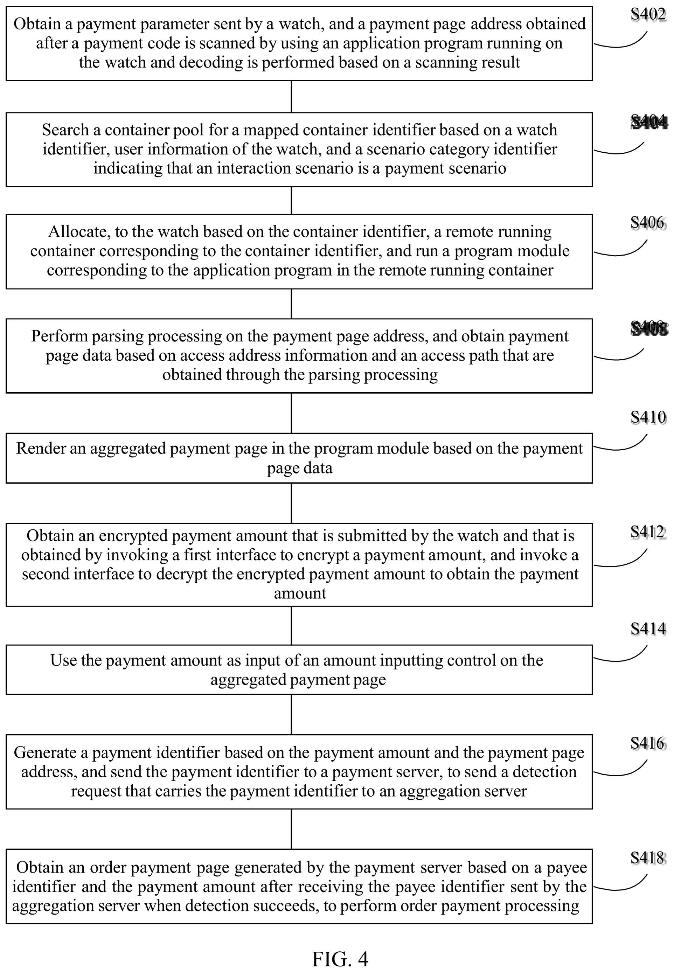

The payment processing method provided in this embodiment is further described by using application of the payment processing method provided in this embodiment in a watch scenario as an example. Referring to FIG. 4, the payment processing method applied to the watch scenario specifically includes the following steps.

Step S402: Obtain a payment parameter sent by a watch, and a payment page address obtained after a payment code is scanned by using an application program running on the watch and decoding is performed based on a scanning result.

Step S404: Search a container pool for a mapped container identifier based on a watch identifier, user information of the watch, and a scenario category identifier indicating that an interaction scenario is a payment scenario.

Step S406: Allocate, to the watch based on the container identifier, a remote running container corresponding to the container identifier, and run a program module corresponding to the application program in the remote running container.

Step S408: Perform parsing processing on the payment page address, and obtain payment page data based on access address information and an access path that are obtained through the parsing processing.

Step S410: Render an aggregated payment page in the program module based on the payment page data.

Step S412: Obtain an encrypted payment amount that is submitted by the watch and that is obtained by invoking a first interface to encrypt a payment amount, and invoke a second interface to decrypt the encrypted payment amount to obtain the payment amount.

Step S414: Use the payment amount as input of an amount inputting control on the aggregated payment page.

Step S416: Generate a payment identifier based on the payment amount and the payment page address, and send the payment identifier to a payment server, to send a detection request that carries the payment identifier to an aggregation server.

Step S418: Obtain an order payment page generated by the payment server based on a payee identifier and the payment amount after receiving the payee identifier sent by the aggregation server when detection succeeds, to perform order payment processing.

One or more embodiments of another payment processing method provided in this specification are as follows.

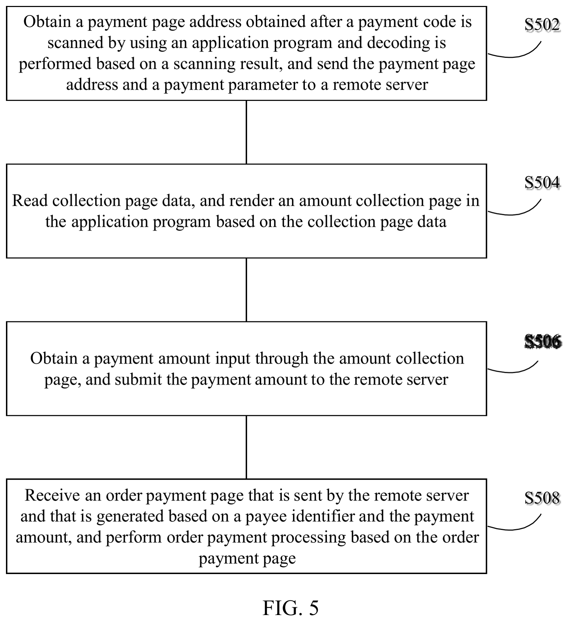

Referring to FIG. 5, a payment processing method provided in an embodiment specifically includes step S502 to step S508.

The payment processing method provided in this embodiment can be applied to a wearable device that runs an application program. The payment processing method provided in the above-mentioned embodiment can be applied to a remote server. In an execution process, the payment processing method that is provided in this embodiment and that can be applied to the wearable device that runs the application program cooperate with the payment processing method that is provided in the above-mentioned embodiment and that can be applied to the remote server. When this embodiment is read, references can be made to related content in the above-mentioned embodiment. Correspondingly, when the above-mentioned embodiment is read, references can also be made to corresponding content in this embodiment.

Step S502: Obtain a payment page address obtained after a payment code is scanned by using the application program and decoding is performed based on a scanning result, and send the payment page address and a payment parameter to a remote server.

This embodiment can be applied to the wearable device that runs the application program. The wearable device in this embodiment can be a watch, smart glasses, etc. The payment parameter refers to a related parameter in a payment process. Optionally, the payment parameter includes at least one of the following: a device identifier of the wearable device, user information of the wearable device, and a scenario category identifier indicating that an interaction scenario is a payment scenario.

The user information of the wearable device includes a user identifier of a user to whom the wearable device belongs. In actual application, there are a plurality of cases in which the wearable device interacts with the remote server, such as a payment scenario, a query scenario, and a verification scenario. In other words, there are a plurality of cases in which the wearable device interacts with the remote server to perform execution processing. In view of this, the payment parameter can include the scenario category identifier indicating that the interaction scenario between the wearable device and the remote server is the payment scenario, where the scenario category identifier includes an identifier that represents scenario uniqueness of the payment scenario.

The payment code refers to an identification code used to perform payment. The payment code can exist in a form of a two-dimensional code, a barcode, an audio code, or another identification code. Optionally, the payment code includes an aggregated code, that is, an aggregated payment code. The payment code can be compatible with a plurality of payment channels. For example, the payment code is compatible with a bank card payment channel, a credit card payment channel, and a third-party payment channel. Optionally, the payment code includes a payment code that is compatible with a payment channel corresponding to the application program.

The application program includes a payment application program, and the application program runs on the wearable device.

The payment page address can be a network resource address, for example, the payment page address can be a uniform resource locator (URL).

In specific implementation, the wearable device obtains the payment page address obtained after the payment code is scanned by using the application program running on the wearable device and decoding is performed based on the scanning result, and sends the payment page address and the payment parameter to the remote server. Correspondingly, the remote server can obtain the payment parameter sent by the wearable device and the payment page address obtained after the payment code is scanned by using the application program running on the wearable device and decoding is performed based on the scanning result. Therefore, a target payment channel can be invoked from a plurality of payment channels by scanning the payment code to perform payment processing, making payment processing convenient.

Specifically, in the process of performing decoding based on the scanning result, the wearable device can perform parsing processing on a scanned payment code image to obtain the payment page address of the payment code. In addition, the wearable device can also send the payment parameter and the scanned payment code image to the remote server, and the remote server performs parsing processing on the scanned payment code image to obtain the payment page address of the payment code.

It is worthwhile to note that, step S502 can be replaced with obtaining a payment page address obtained after a payment code is scanned by using the application program and decoding is performed based on a scanning result, and sending the payment page address to a remote server, and can form a new implementation with other processing steps provided in this embodiment.

Step S504: Read collection page data, and render an amount collection page in the application program based on the collection page data.

In the above, the remote server obtains the payment parameter sent by the wearable device, and the payment page address obtained after the payment code is scanned by using the application program running on the wearable device and decoding is performed based on the scanning result. Afterwards, to improve pertinence of payment processing, the remote server can allocate a remote running container to the wearable device based on the payment parameter, and run a program module corresponding to the application program in the remote running container.

The remote running container refers to a running framework or a running engine that is provided for the remote server. The remote running container is configured on a host machine deployed on the remote server, so that the program module can be run in the remote running container. The program module in this embodiment runs in the remote running container running on the host machine deployed on the remote server. The program module includes a program function module or an application component, and the program module can be an application program running on a lightweight wearable device. The host machine can be a virtual machine, or can be a real hardware machine. In a process in which the remote server interacts with the wearable device, the application program on the wearable device actually interacts with the program module on the remote server.

In specific implementation, in the entire process in which the remote server allocates the remote running container to the wearable device based on the payment parameter, runs the program module corresponding to the application program in the remote running container, and renders the aggregated payment page in the program module based on the payment page address, the wearable device can read collection page data, renders an amount collection page in the application program based on the collection page data, obtains the payment amount input through the amount collection page, and submits the payment amount to the remote server.

In specific implementation, to improve precision of container allocation and improve efficiency of container allocation, in an optional implementation provided in this embodiment, in the process of allocating the remote running container to the wearable device based on the payment parameter, the remote server allocates the remote running container to the wearable device based on the device identifier of the wearable device, the user information of the wearable device, and/or the scenario category identifier indicating that an interaction scenario is a payment scenario that are/is included in the payment parameter. The following operations are specifically performed: searching a container pool for a mapped container identifier based on the device identifier of the wearable device, the user information of the wearable device, and/or the scenario category identifier indicating that an interaction scenario is a payment scenario that are/is included in the payment parameter; and allocating, to the wearable device based on the container identifier, the remote running container corresponding to the container identifier.

Specifically, a mapping relationship can be established between the device identifier of the wearable device, the user information of the wearable device, and/or the scenario category identifier indicating that an interaction scenario is a payment scenario and container identifiers in the container pool. In view of this, the container pool can be searched for the mapped container identifier based on the device identifier of the wearable device, the user information of the wearable device, and/or the scenario category identifier indicating that an interaction scenario is a payment scenario that are/is included in the payment parameter, and the remote running container corresponding to the container identifier can be allocated to the wearable device.

The aggregated payment page in this embodiment includes a payment page corresponding to the payment code. To be specific, a same payment page, that is, the aggregated payment page, can be displayed after the payment code is scanned by using application programs corresponding to payment channels. The payment amount refers to an amount that a user needs to be paid in a payment processing process.

In a specific execution process, the remote server can obtain payment page data based on access address information and an access path that are obtained by performing parsing processing on the payment page address, and render the aggregated payment page in the program module based on the payment page data to obtain the aggregated payment page. In an optional implementation provided in this embodiment, in the process of rendering the aggregated payment page in the program module based on the payment page address, the remote server performs the following operations: performing parsing processing on the payment page address, and obtaining payment page data based on access address information and an access path that are obtained through the parsing processing; and rendering the aggregate payment page in the program module based on the payment page data.

The access address information includes access host address information, and the access address information can be a domain name or a host identifier, or can be an Internet Protocol (IP) address. The access path includes a storage path for payment page data. The payment page data includes page data required for rendering the aggregated payment page.

It is worthwhile to note that, step S504 can be replaced with obtaining collection page data delivered by the remote server and rendering an amount collection page in the application program based on the obtained collection page data, and can form a new implementation with other processing steps provided in this embodiment.

Step S506: Obtain a payment amount input through the amount collection page, and submit the payment amount to the remote server.

In the above, the wearable device reads the collection page data, and renders the amount collection page in the application program based on the collection page data. In this step, the wearable device obtains the payment amount input through the payment amount collection page, and submits the payment amount to the remote server. Correspondingly, the remote server uses the payment amount submitted by the wearable device as input of the aggregated payment page.

In actual application, in the process of submitting the payment amount to the remote server, if the payment amount is directly sent to the remote server, data of the payment amount may be disclosed. In view of this, to improve security of the payment amount in the submission process, in an optional implementation provided in this embodiment, after execution of obtaining a payment amount input through the payment collection page, and before execution of submitting the payment amount to the remote server, the method further includes: invoking a first interface to encrypt the payment amount to obtain an encrypted payment amount. Correspondingly, submitting the payment amount to the remote server includes: submitting the encryption payment amount to the remote server, to invoke a second interface to decrypt the encryption payment amount to obtain the payment amount. Optionally, there is a correspondence between the first interface and the second interface, or an interface configuration of the first interface is the same as that of the second interface.

In one case, the correspondence includes a relationship that the first interface is an encryption interface and the second interface is a decryption interface. In another case, the interface configuration of the first interface can be the same as that of the second interface. The interface configuration includes an encryption module and a decryption module, that is, the encryption module and the decryption module are configured for both the first interface and the second interface.

In specific implementation, the amount collection page can alternatively be generated in the following method: obtaining collection page data delivered by the remote server, and rendering the amount collection page in the application program based on the obtained collection page data.

In addition to the implementation in which the payment amount obtained by the remote server is input by the wearable device through the amount collection page and submitted to the remote server, in an actual application scenario, because the amount collection page of the wearable device such as a watch is relatively small, convenience of inputting the payment amount through the amount collection page of the watch is relatively poor. In view of this, to improve convenience of inputting the payment amount to improve efficiency of inputting the payment amount, optionally, the payment amount is submitted to the remote server after the wearable device detects that a user inputs the payment amount by using an interaction tool corresponding to the payment code. The interaction tool includes a device that interacts with the user.

In addition, the interaction tool corresponding to the payment code can alternatively collect the payment amount input by the user and send the payment amount to an aggregation server, and the aggregation server synchronizes the payment amount to the remote server. In other words, the payment amount is collected by the interaction tool corresponding to the payment code and sent to the aggregation server, and is synchronized to the remote server by the aggregation server. The payment code belongs to an aggregation platform corresponding to the aggregation server.

Step S504 and step S506 can be replaced with obtaining a payment amount that is input by a user and that is synchronized by an interactive tool corresponding to the payment code, and submitting the payment amount to the remote server. Optionally, the wearable device obtains the payment amount from the interaction tool based on a data connection established to the interaction tool, where the data connection may be a Bluetooth connection. The two steps form a new implementation with other processing steps provided in this embodiment.

Step S508: Receive an order payment page that is sent by the remote server and that is generated based on a payee identifier and the payment amount, and perform order payment processing based on the order payment page.

In the above, the wearable device obtains the payment amount input through the amount collection page, and submits the payment amount to the remote server. In this step, the wearable device receives the order payment page that is sent by the remote server and that is generated based on the payee identifier and the payment amount, and performs order payment processing based on the order payment page.

Optionally, the order payment page is generated after the remote running container is allocated to the wearable device based on the payment parameter, the program module corresponding to the application program is run in the remote running container, and the aggregated payment page is rendered in the program module based on the payment page address.

The payee identifier in this embodiment refers to an identifier of a payee in a payment processing process. The order payment page includes a page for paying for a to-be-paid order. The order payment page can be configured with the payment amount, payee identifier, and/or a payment control. In addition, the order payment page can also be configured with other data.

Optionally, the order payment page is generated based on a collection code identifier and the payment amount after a payment server receives the collection code identifier sent by an aggregation server corresponding to the payment code. The payment server includes a server that performs payment processing.

In specific implementation, in an optional implementation provided in this embodiment, in the process of performing order payment processing based on the order payment page, the following operations are performed: sending a payment request to a payment server based on a trigger instruction for a payment control on the order payment page, so that after identity verification is performed on a user based on a biometric feature of the user collected by a camera invoked by the wearable device and the verification succeeds, funds are transferred from a user account based on the payment amount, and the transferred funds are transferred to a fund account corresponding to an aggregation server.

In this embodiment of this application, the biometric feature of the user can include, for example, an eye feature, a voiceprint, a fingerprint, a palmprint, a heartbeat, a pulse, a chromosome, DNA, and a bite mark of a human tooth. The eye feature can include a biometric feature such as an iris or a sclera.

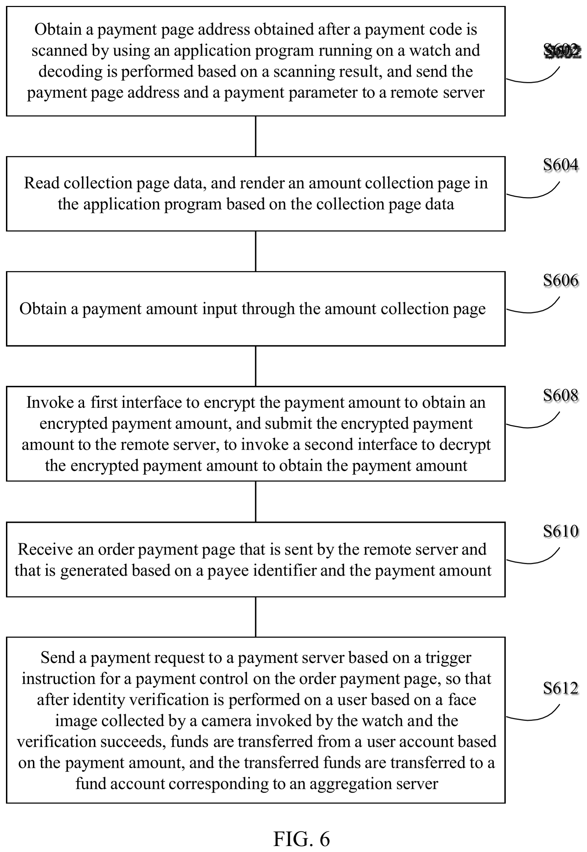

The payment processing method provided in this embodiment is further described by using application of the another payment processing method provided in this embodiment in a watch scenario as an example. Referring to FIG. 6, the payment processing method applied to the watch scenario specifically includes the following steps.

Step S602: Obtain a payment page address obtained after a payment code is scanned by using an application program running on a watch and decoding is performed based on a scanning result, and send the payment page address and a payment parameter to a remote server.

Step S604: Read collection page data, and render an amount collection page in the application program based on the collection page data.

Step S606: Obtain a payment amount input through the amount collection page.

Step S608: Invoke a first interface to encrypt the payment amount to obtain an encrypted payment amount, and submit the encrypted payment amount to the remote server, to invoke a second interface to decrypt the encrypted payment amount to obtain the payment amount.

Step S610: Receive an order payment page that is sent by the remote server and that is generated based on a payee identifier and the payment amount.

Step S612: Send a payment request to a payment server based on a trigger instruction for a payment control on the order payment page, so that after identity verification is performed on a user based on a face image collected by a camera invoked by the watch and the verification succeeds, funds are transferred from a user account based on the payment amount, and the transferred funds are transferred to a fund account corresponding to an aggregation server.

An embodiment of a payment processing apparatus provided in this specification is as follows.

In the above-mentioned embodiments, a payment processing method is provided, and correspondingly, a payment processing apparatus is further provided, which is described below with reference to the accompanying drawings.

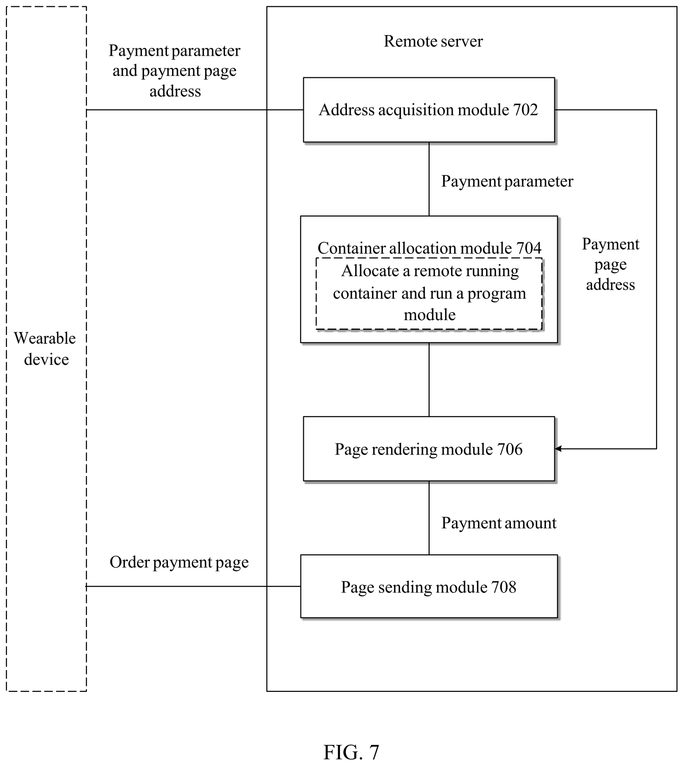

FIG. 7 is a schematic diagram illustrating an embodiment of a payment processing apparatus, according to one or more embodiments.

The apparatus embodiment corresponds to the method embodiment, and therefore is described briefly. For related parts, references can be made to the corresponding description of the method embodiment provided above. The apparatus embodiment described below is merely an example.

One or more embodiments provide a payment processing apparatus that runs on a remote server. The apparatus includes:
an address acquisition module 702, configured to obtain a payment parameter sent by a wearable device, and a payment page address obtained after a payment code is scanned by using an application program running on the wearable device and decoding is performed based on a scanning result;
a container allocation module 704, configured to: allocate a remote running container to the wearable device based on the payment parameter, and run a program module corresponding to the application program in the remote running container;
a page rendering module 706, configured to: render an aggregated payment page in the program module based on the payment page address, and use a payment amount submitted by the wearable device as input of the aggregated payment page; and
a page sending module 708, configured to: perform payment verification based on the payment amount and the payment page address, and send, to the wearable device after the verification succeeds, an order payment page generated based on a payee identifier and the payment amount to perform order payment processing.

An embodiment of another payment processing apparatus provided in this specification is as follows.

In the above-mentioned embodiment, another payment processing method is provided, and correspondingly, another payment processing apparatus is further provided, which is described below with reference to the accompanying drawings.

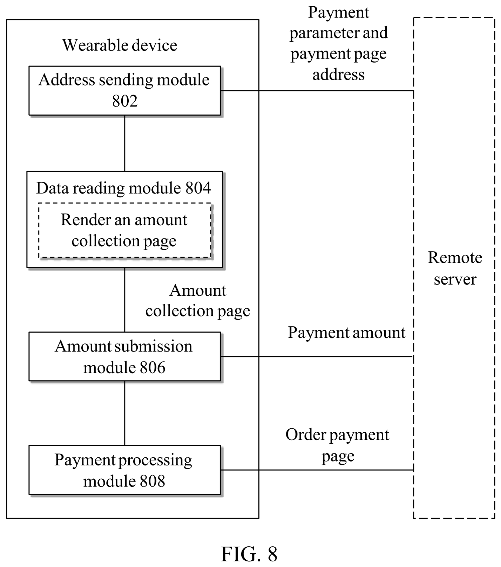

FIG. 8 is a schematic diagram illustrating an embodiment of another payment processing apparatus, according to one or more embodiments.

The apparatus embodiment corresponds to the method embodiment, and therefore is described briefly. For related parts, references can be made to the corresponding description of the method embodiment provided above. The apparatus embodiment described below is merely an example.

One or more embodiments provide a payment processing apparatus running on a wearable device that runs an application program. The apparatus includes:
an address sending module 802, configured to: obtain a payment page address obtained after a payment code is scanned by using an application program and decoding is performed based on a scanning result, and send the payment page address and a payment parameter to a remote server;
a data reading module 804, configured to: read collection page data, and render an amount collection page in the application program based on the collection page data;
an amount submission module 806, configured to: obtain a payment amount input through the amount collection page, and submit the payment amount to the remote server; and
a payment processing module 808, configured to: receive an order payment page that is sent by the remote server and that is generated based on a payee identifier and the payment amount, and perform order payment processing based on the order payment page, where the order payment page is generated after a remote running container is allocated to the wearable device based on the payment parameter, a program module corresponding to the application program is run in the remote running container, and an aggregated payment page is rendered in the program module based on the payment page address.

An embodiment of a payment processing device provided in this specification is as follows.

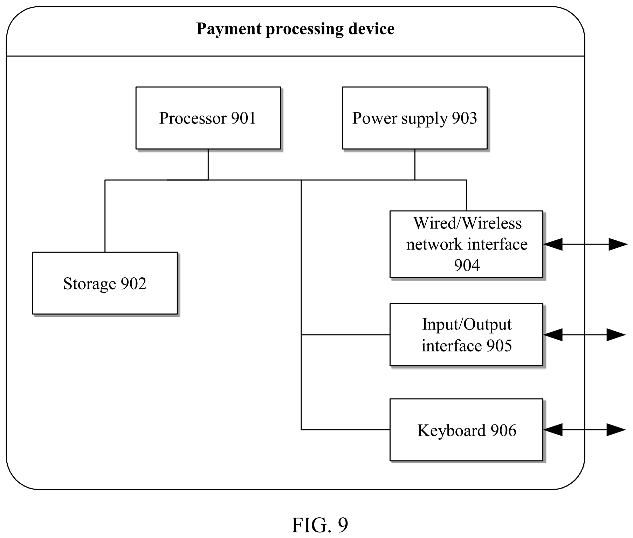

Corresponding to a payment processing method described above, based on a same technical concept, one or more embodiments of this specification further provide a payment processing device. The payment processing device is configured to perform the payment processing method provided above. FIG. 9 is a schematic structural diagram illustrating a payment processing device, according to one or more embodiments of this specification.

One or more embodiments provide a payment processing device, including the following.

As shown in FIG. 9, the payment processing device can vary greatly with configuration or performance, and can include one or more processors 901 and a storage 902. The storage 902 can store one or more storage application programs or data. The storage 902 can be a transitory storage or persistent storage. The application program stored in the storage 902 can include one or more modules (not shown in the figure), and each module can include a series of computer-executable instructions in the payment processing device. Still further, the processor 901 can be configured to communicate with the storage 902 to execute a series of computer-executable instructions in the storage 902 on the payment processing device. The payment processing device can further include one or more power supplies 903, one or more wired or wireless network interfaces 904, one or more input/output interfaces 905, one or more keyboards 906, etc.

In a specific embodiment, the payment processing device includes a storage and one or more programs. The one or more programs are stored in the storage. The one or more programs can include one or more modules. Each module can include a series of computer-executable instructions in the payment processing device. One or more processors are configured to execute the computer-executable instructions included in the one or more programs to perform the following operations: obtaining a payment parameter sent by a wearable device, and a payment page address obtained after a payment code is scanned by using an application program running on the wearable device and decoding is performed based on a scanning result; allocating a remote running container to the wearable device based on the payment parameter, and running a program module corresponding to the application program in the remote running container; rendering an aggregated payment page in the program module based on the payment page address, and using a payment amount submitted by the wearable device as input of the aggregated payment page; and performing payment verification based on the payment amount and the payment page address, and sending, to the wearable device after the verification succeeds, an order payment page generated based on a payee identifier and the payment amount to perform order payment processing.

An embodiment of another payment processing device provided in this specification is as follows.

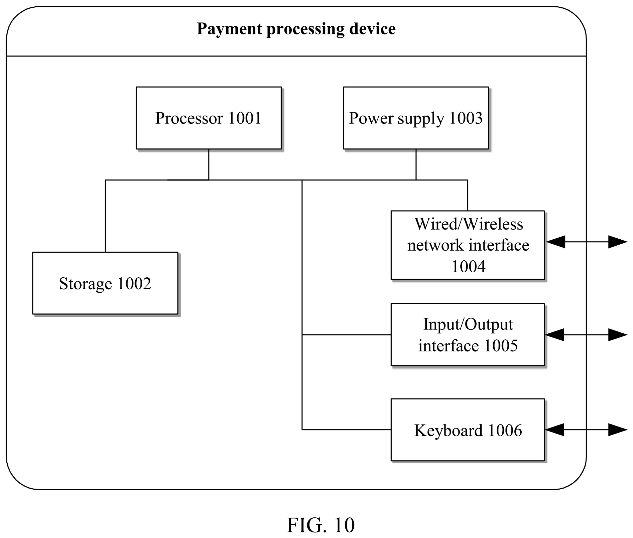

Corresponding to another payment processing method described above, based on a same technical concept, one or more embodiments of this specification further provide another payment processing device. The payment processing device is configured to perform the another payment processing method provided above. FIG. 10 is a schematic structural diagram illustrating a payment processing device, according to one or more embodiments of this specification.

One or more embodiments provide a payment processing device, including the following.

As shown in FIG. 10, the payment processing device can vary greatly with configuration or performance, and can include one or more processors 1001 and a storage 1002. The storage 1002 can store one or more storage application programs or data. The storage 1002 can be a transitory storage or persistent storage. The application program stored in the storage 1002 can include one or more modules (not shown in the figure), and each module can include a series of computer-executable instructions in the payment processing device. Still further, the processor 1001 can be configured to communicate with the storage 1002 to execute a series of computer-executable instructions in the storage 1002 on the payment processing device. The payment processing device can further include one or more power supplies 1003, one or more wired or wireless network interfaces 1004, one or more input/output interfaces 1005, one or more keyboards 1006, etc.

In a specific embodiment, the payment processing device includes a storage and one or more programs. The one or more programs are stored in the storage. The one or more programs can include one or more modules. Each module can include a series of computer-executable instructions in the payment processing device. One or more processors are configured to execute the computer-executable instructions included in the one or more programs to perform the following operations: obtaining a payment page address obtained after a payment code is scanned by using an application program and decoding is performed based on a scanning result, and sending the payment page address and a payment parameter to a remote server; reading collection page data, and rendering an amount collection page in the application program based on the collection page data; obtaining a payment amount input through the amount collection page, and submitting the payment amount to the remote server; and receiving an order payment page that is sent by the remote server and that is generated based on a payee identifier and the payment amount, and performing order payment processing based on the order payment page, where the order payment page is generated after a remote running container is allocated to the wearable device based on the payment parameter, a program module corresponding to the application program is run in the remote running container, and an aggregated payment page is rendered in the program module based on the payment page address.

An embodiment of a storage medium provided in this specification is as follows.

Corresponding to a payment processing method described above, based on a same technical concept, one or more embodiments of this specification further provide a storage medium.

The storage medium provided in the one or more embodiments is configured to store computer-executable instructions. When the computer-executable instructions are executed by a processor, the following procedure is implemented: obtaining a payment parameter sent by a wearable device, and a payment page address obtained after a payment code is scanned by using an application program running on the wearable device and decoding is performed based on a scanning result; allocating a remote running container to the wearable device based on the payment parameter, and running a program module corresponding to the application program in the remote running container; rendering an aggregated payment page in the program module based on the payment page address, and using a payment amount submitted by the wearable device as input of the aggregated payment page; and performing payment verification based on the payment amount and the payment page address, and sending, to the wearable device after the verification succeeds, an order payment page generated based on a payee identifier and the payment amount to perform order payment processing.

It is worthwhile to note that the embodiment of the storage medium in this specification and the embodiment of the payment processing method in this specification are based on a same invention concept. Therefore, for specific implementation of this embodiment, references can be made to the above-mentioned implementation of the corresponding method, and repeated parts are omitted for simplicity.

An embodiment of another storage medium provided in this specification is as follows.

Corresponding to another payment processing method described above, based on a same technical concept, one or more embodiments of this specification further provide another storage medium.

The storage medium provided in the one or more embodiments is configured to store computer-executable instructions. When the computer-executable instructions are executed by a processor, the following procedure is implemented: obtaining a payment page address obtained after a payment code is scanned by using an application program and decoding is performed based on a scanning result, and sending the payment page address and a payment parameter to a remote server; reading collection page data, and rendering an amount collection page in the application program based on the collection page data; obtaining a payment amount input through the amount collection page, and submitting the payment amount to the remote server; and receiving an order payment page that is sent by the remote server and that is generated based on a payee identifier and the payment amount, and performing order payment processing based on the order payment page, where the order payment page is generated after a remote running container is allocated to the wearable device based on the payment parameter, a program module corresponding to the application program is run in the remote running container, and an aggregated payment page is rendered in the program module based on the payment page address.

It is worthwhile to note that the embodiment of the another storage medium in this specification and the embodiment of the another payment processing method in this specification are based on a same invention concept. Therefore, for specific implementation of this embodiment, references can be made to the above-mentioned implementation of the corresponding method, and repeated parts are omitted for simplicity.

The embodiments of this specification are described in a progressive way. For same or similar parts in the embodiments, references can be made to each other. Each embodiment focuses on a difference from another embodiment. For example, the apparatus embodiments, the device embodiments, and the storage medium embodiments are all similar to the method embodiments, and therefore are briefly described. For reading of related content in the apparatus embodiments, the device embodiments, and the storage medium embodiments, refer to some descriptions in the method embodiments.

Specific embodiments of this specification are described above. Other embodiments fall within the scope of the appended claims. In some cases, actions or steps described in the claims can be performed in an order different from that in the embodiments and desired results can still be achieved. In addition, the processes depicted in the accompanying drawings do not necessarily need a specific order or a sequential order to achieve the desired results. In some implementations, multi-tasking and parallel processing are feasible or may be advantageous.

In the 1930s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by a user through device programming. The designer performs programming to "integrate" a digital system to a PLD without requesting a chip manufacturer to design and produce an application-specific integrated circuit chip. In addition, at present, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using some of the above-mentioned described hardware description languages and is programmed into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. The storage controller can also be implemented as a part of the control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is divided into various units based on functions for separate description. Certainly, when the embodiments of this specification are implemented, functions of the units can be implemented in one or more pieces of software and/or hardware.

A person skilled in the art should understand that one or more embodiments of this specification can be provided as a method, system, or computer program product. Therefore, one or more embodiments of this specification can use a form of hardware only embodiments, software only embodiments, or embodiments with a combination of software and hardware. In addition, a form of a computer program product that is implemented on one or more computer-usable storage media (including but not limited to a disk storage, a CD-ROM, an optical storage, etc.) that include computer-usable program code can be used in this specification.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more procedures in the flowcharts and/or in one or more blocks in the block diagrams.

These computer program instructions can alternatively be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more procedures in the flowcharts and/or in one or more blocks in the block diagrams.

These computer program instructions can alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory can include a non-permanent memory in a computer readable medium, a random access memory (RAM), and/or a non-volatile memory, such as a read-only memory (ROM) or a flash memory (flash RAM). The memory is an example of the computer-readable medium.

Computer-readable media, including permanent and non-permanent, removable and non-removable media, can implement information storage by any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a magnetic disk storage, or another magnetic storage device or any other non-transmission medium. The computer storage medium can be configured to store information that can be accessed by a computing device. As defined in this specification, the computer-readable medium does not include computer-readable transitory media, such as a modulated data signal and a carrier.

It is worthwhile to further note that the terms "include", "comprise", or any other variants thereof are intended to cover a non-exclusive inclusion, so that a process, method, product, or device that includes a list of elements not only includes those elements but also includes other elements which are not expressly listed, or further includes elements inherent to such a process, method, product, or device. Without more constraints, an element preceded by "includes a ..." does not preclude the existence of additional identical elements in the process, method, product or device that includes the element.

One or more embodiments of this specification can be described in the general context of computer executable instructions executed by a computer, such as a program module. Generally, the program module includes a routine, a program, an object, a component, a data structure, etc. executing a specific task or implementing a specific abstract data type. The one or more embodiments of this specification can also be practiced in distributed computing environments. In the distributed computing environments, tasks are executed by remote processing devices that are connected through a communication network. In the distributed computing environments, the program module can be located in both local and remote computer storage media including storage devices.

The embodiments of this specification are described in a progressive way. For same or similar parts in the embodiments, references can be made to each other. Each embodiment focuses on a difference from another embodiment. Particularly, the system embodiments are basically similar to the method embodiments, and therefore are described briefly. For related parts, references can be made to some descriptions in the method embodiments.

The above-mentioned descriptions are merely embodiments of this specification, and are not intended to limit this specification. A person skilled in the art can make various changes and variations to this specification. Any modification, equivalent replacement, improvement, etc. made without departing from the spirit and principles of this specification shall fall within the claims of this specification.

## Claims

1. A payment processing method, applied to a remote server, wherein the method comprises:
obtaining a payment parameter sent by a wearable device, and a payment page address obtained after a payment code is scanned by using an application program running on the wearable device and decoding is performed based on a scanning result;
allocating a remote running container to the wearable device based on the payment parameter, and running a program module corresponding to the application program in the remote running container;
rendering an aggregated payment page in the program module based on the payment page address, and using a payment amount submitted by the wearable device as input of the aggregated payment page; and
performing payment verification based on the payment amount and the payment page address, and sending, to the wearable device after the verification succeeds, an order payment page generated based on a payee identifier and the payment amount to perform order payment processing.

2. The payment processing method according to claim 1, wherein rendering the aggregated payment page in the program module based on the payment page address comprises:
performing parsing processing on the payment page address, and obtaining payment page data based on access address information and an access path that are obtained through the parsing processing; and
rendering the aggregate payment page in the program module based on the payment page data.

3. The payment processing method according to claim 1, wherein the payment code comprises a payment code that is compatible with a payment channel corresponding to the application program; and
the order payment page is generated based on a collection code identifier and the payment amount after a payment server receives the collection code identifier sent by an aggregation server corresponding to the payment code.

4. The payment processing method according to claim 1, wherein allocating the remote running container to the wearable device based on the payment parameter comprises:
searching a container pool for a mapped container identifier based on a device identifier of the wearable device, user information of the wearable device, and/or a scenario category identifier indicating that an interaction scenario is a payment scenario that are/is comprised in the payment parameter; and
allocating, to the wearable device based on the container identifier, the remote running container corresponding to the container identifier.

5. The payment processing method according to claim 1, after execution of the operation of rendering an aggregated payment page in the program module based on the payment page address, and before execution of the operation of using a payment amount submitted by the wearable device as input of the aggregated payment page, the method further comprises:
obtaining an encrypted payment amount that is submitted by the wearable device and that is obtained after a first interface is invoked to encrypt the payment amount; and
invoking a second interface to decrypt the encrypted payment amount to obtain the payment amount, wherein
there is a correspondence between the first interface and the second interface, or an interface configuration of the first interface is the same as that of the second interface.

6. The payment processing method according to claim 1, wherein performing the payment verification based on the payment amount and the payment page address comprises:
generating a payment identifier based on the payment amount and the payment page address, and sending the payment identifier to a payment server, to send a detection request that carries the payment identifier to an aggregation server; and
determining that the payment verification succeeds when detection is performed based on the payment identifier and the detection succeeds.

7. The payment processing method according to claim 6, wherein after sending the detection request that carries the payment identifier to the aggregation server, the payment server performs the following operations:
obtaining the payee identifier returned by the aggregation server after the detection succeeds; and
generating the order payment page based on the payment amount and the payee identifier, and sending the order payment page to the remote server, wherein
the detection comprises: verifying, based on the payment identifier, whether a merchant corresponding to the payment page address exists in a merchant set, and if yes, determining that the detection succeeds; or determining, based on the payment identifier, whether the payment amount is within a preset amount value range, and if yes, determining that the detection succeeds.

8. The payment processing method according to claim 1, wherein the order payment processing comprises:
obtaining a trigger instruction for a payment control on the order payment page; and
sending a payment request to a payment server based on the trigger instruction, to transfer funds from a user account based on the payment amount, and transfer the transferred funds to a fund account corresponding to an aggregation server.

9. The payment processing method according to claim 1, wherein the payment amount is obtained by the wearable device through input on an amount collection page; and
the amount collection page is generated in the following method:
reading collection page data, and rendering the amount collection page in the application program based on the collection page data;
or
obtaining collection page data delivered by the remote server, and rendering the amount collection page in the application program based on the obtained collection page data.

10. The payment processing method according to claim 1, wherein the order payment processing comprises:
sending a payment request to a payment server based on a trigger instruction for a payment control on the order payment page, so that after identity verification is performed on a user based on a biometric feature of the user collected by a camera invoked by the wearable device and the verification succeeds, funds are transferred from a user account based on the payment amount, and the transferred funds are transferred to a fund account corresponding to an aggregation server.

11. The payment processing method according to claim 1, wherein the payment amount is submitted to the remote server after the wearable device detects that a user inputs the payment amount by using an interaction tool corresponding to the payment code.

12. The payment processing method according to claim 1, wherein after execution of the steps of performing payment verification based on the payment amount and the payment page address, and sending, to the wearable device after the verification succeeds, an order payment page generated based on a payee identifier and the payment amount to perform order payment processing, the method further comprises:
delivering a detection message to the wearable device based on a time period; and
exiting running of the program module in the remote running container if a quantity of detection messages that are not responded by the wearable device within preset time exceeds a preset quantity threshold.

13. The payment processing method according to claim 1, performing the payment verification based on the payment amount and the payment page address, and sending, to the wearable device after the verification succeeds, an order payment page generated based on a payee identifier and the payment amount comprises:
generating a payment identifier based on the payment amount and the payment page address, and sending the payment identifier to a payment server, to send a detection request that carries the payment identifier to an aggregation server;
sending, after the detection succeeds, an institution payment verification request that carries an institution payment identifier to the payment server, to perform institution payment verification on the payment amount based on the institution payment identifier;
obtaining a verification success reminder synchronized by the payment server after the institution payment verification succeeds, and sending an information request instruction to the aggregation server based on the verification success reminder to send the payee identifier to the payment server; and
obtaining the order payment page that is sent by the payment server and that is generated based on the payment amount and the payee identifier.

14. The payment processing method according to claim 1, wherein after execution of the steps of performing payment verification based on the payment amount and the payment page address, and sending, to the wearable device after the verification succeeds, an order payment page generated based on a payee identifier and the payment amount to perform order payment processing, the method further comprises:
performing resource release on the remote running container, and performing resource release on a host machine that runs the remote running container.

15. A payment processing method, applied to a wearable device that runs an application program, wherein the method comprises:
obtaining a payment page address obtained after a payment code is scanned by using the application program and decoding is performed based on a scanning result, and sending the payment page address and a payment parameter to a remote server;
reading collection page data, and rendering an amount collection page in the application program based on the collection page data;
obtaining a payment amount input through the amount collection page, and submitting the payment amount to the remote server; and
receiving an order payment page that is sent by the remote server and that is generated based on a payee identifier and the payment amount, and performing order payment processing based on the order payment page, wherein
the order payment page is generated after a remote running container is allocated to the wearable device based on the payment parameter, a program module corresponding to the application program is run in the remote running container, and an aggregated payment page is rendered in the program module based on the payment page address.

16. The payment processing method according to claim 15, wherein rendering the aggregated payment page in the program module based on the payment page address comprises:
performing parsing processing on the payment page address, and obtaining payment page data based on access address information and an access path that are obtained through the parsing processing; and
rendering the aggregate payment page in the program module based on the payment page data.

17. The payment processing method according to claim 15, wherein allocating the remote running container to the wearable device based on the payment parameter comprises:
searching a container pool for a mapped container identifier based on a device identifier of the wearable device, user information of the wearable device, and/or a scenario category identifier indicating that an interaction scenario is a payment scenario that are/is comprised in the payment parameter; and
allocating, to the wearable device based on the container identifier, the remote running container corresponding to the container identifier.

18. The payment processing method according to claim 15, wherein after execution of the operation of obtaining a payment amount input through the amount collection page, and before execution of the operation of submitting the payment amount to the remote server, the method further comprises:
invoking a first interface to encrypt the payment amount to obtain an encrypted payment amount; and
correspondingly, submitting the payment amount to the remote server comprises:
submitting the encrypted payment amount to the remote server, to invoke a second interface to decrypt the encrypted payment amount to obtain the payment amount, wherein
there is a correspondence between the first interface and the second interface, or an interface configuration of the first interface is the same as that of the second interface.

19. The payment processing method according to claim 15, wherein performing the order payment processing based on the order payment page comprises:
sending a payment request to a payment server based on a trigger instruction for a payment control on the order payment page, so that after identity verification is performed on a user based on a biometric feature of the user collected by a camera invoked by the wearable device and the verification succeeds, funds are transferred from a user account based on the payment amount, and the transferred funds are transferred to a fund account corresponding to an aggregation server.

20. A payment processing apparatus, running on a remote server, wherein the apparatus comprises:
an address acquisition module, configured to obtain a payment parameter sent by a wearable device, and a payment page address obtained after a payment code is scanned by using an application program running on the wearable device and decoding is performed based on a scanning result;
a container allocation module, configured to: allocate a remote running container to the wearable device based on the payment parameter, and run a program module corresponding to the application program in the remote running container;
a page rendering module, configured to: render an aggregated payment page in the program module based on the payment page address, and use a payment amount submitted by the wearable device as input of the aggregated payment page; and
a page sending module, configured to: perform payment verification based on the payment amount and the payment page address, and send, to the wearable device after the verification succeeds, an order payment page generated based on a payee identifier and the payment amount to perform order payment processing.

21. A payment processing apparatus, running on a wearable device that runs an application program, wherein the apparatus comprises:
an address sending module, configured to: obtain a payment page address obtained after a payment code is scanned by using the application program and decoding is performed based on a scanning result, and send the payment page address and a payment parameter to a remote server;
a data reading module, configured to: read collection page data, and render an amount collection page in the application program based on the collection page data;
an amount submission module, configured to: obtain a payment amount input through the amount collection page, and submit the payment amount to the remote server; and
a payment processing module, configured to: receive an order payment page that is sent by the remote server and that is generated based on a payee identifier and the payment amount, and perform order payment processing based on the order payment page, wherein the order payment page is generated after a remote running container is allocated to the wearable device based on the payment parameter, a program module corresponding to the application program is run in the remote running container, and an aggregated payment page is rendered in the program module based on the payment page address.

22. A payment processing device, comprising:
a processor; and a storage configured to store computer-executable instructions, wherein when the computer-executable instructions are executed, the processor is enabled to perform the following operations:
obtaining a payment parameter sent by a wearable device, and a payment page address obtained after a payment code is scanned by using an application program running on the wearable device and decoding is performed based on a scanning result;
allocating a remote running container to the wearable device based on the payment parameter, and running a program module corresponding to the application program in the remote running container;
rendering an aggregated payment page in the program module based on the payment page address, and using a payment amount submitted by the wearable device as input of the aggregated payment page; and
performing payment verification based on the payment amount and the payment page address, and sending, to the wearable device after the verification succeeds, an order payment page generated based on a payee identifier and the payment amount to perform order payment processing.

23. A payment processing device, comprising:
a processor; and a storage configured to store computer-executable instructions, wherein when the computer-executable instructions are executed, the processor is enabled to perform the following operations:
obtaining a payment page address obtained after a payment code is scanned by using an application program and decoding is performed based on a scanning result, and sending the payment page address and a payment parameter to a remote server;
reading collection page data, and rendering an amount collection page in the application program based on the collection page data;
obtaining a payment amount input through the amount collection page, and submitting the payment amount to the remote server; and
receiving an order payment page that is sent by the remote server and that is generated based on a payee identifier and the payment amount, and performing order payment processing based on the order payment page, wherein
the order payment page is generated after a remote running container is allocated to the wearable device based on the payment parameter, a program module corresponding to the application program is run in the remote running container, and an aggregated payment page is rendered in the program module based on the payment page address.

24. A storage medium, configured to store computer-executable instructions, wherein when the computer-executable instructions are executed by a processor, the following procedure is implemented:
obtaining a payment parameter sent by a wearable device, and a payment page address obtained after a payment code is scanned by using an application program running on the wearable device and decoding is performed based on a scanning result;
allocating a remote running container to the wearable device based on the payment parameter, and running a program module corresponding to the application program in the remote running container;
rendering an aggregated payment page in the program module based on the payment page address, and using a payment amount submitted by the wearable device as input of the aggregated payment page; and
performing payment verification based on the payment amount and the payment page address, and sending, to the wearable device after the verification succeeds, an order payment page generated based on a payee identifier and the payment amount to perform order payment processing.

25. A storage medium, configured to store computer-executable instructions, wherein when the computer-executable instructions are executed by a processor, the following procedure is implemented:
obtaining a payment page address obtained after a payment code is scanned by using an application program and decoding is performed based on a scanning result, and sending the payment page address and a payment parameter to a remote server;
reading collection page data, and rendering an amount collection page in the application program based on the collection page data;
obtaining a payment amount input through the amount collection page, and submitting the payment amount to the remote server; and
receiving an order payment page that is sent by the remote server and that is generated based on a payee identifier and the payment amount, and performing order payment processing based on the order payment page, wherein
the order payment page is generated after a remote running container is allocated to the wearable device based on the payment parameter, a program module corresponding to the application program is run in the remote running container, and an aggregated payment page is rendered in the program module based on the payment page address.
